# EUROPEAN PATENT SPECIFICATION

(11) **EP 0 851 134 B1**
(45) Date of publication and mention of the grant of the patent: **23.04.2003**
(21) Application number: 97309932.8
(22) Date of filing: 09.12.1997
(51) Int. Cl.: F16C 33/74, F16C 33/10

(54) **Dynamic pressure bearing device**
Dynamische Drucklagervorrichtung
Dispositif de palier à pression dynamique

(30) Priority: 10.12.1996 JP 34673896; 10.12.1996 JP 34673996
(43) Date of publication of application: 01.07.1998
(60) Divisional application: 01203320.5
(73) Proprietor: SEIKO SEIKI KABUSHIKI KAISHA, Narashino-shi Chiba (JP)
(72) Inventor: Takehara, Isamu, Narashino-shi, Chiba (JP); Hayashi, Tomohiko, Narashino-shi, Chiba (JP)
(74) Representative: Sturt, Clifford Mark

(56) References cited:
- US-A- 3 420 583
- US-A- 3 484 143
- US-A- 4 445 793
- US-A- 5 433 529
- US-A- 5 533 811
- US-A- 5 658 080

## Description

The present invention relates to a dynamic bearing device used as a bearing for a motor such as a spindle motor.

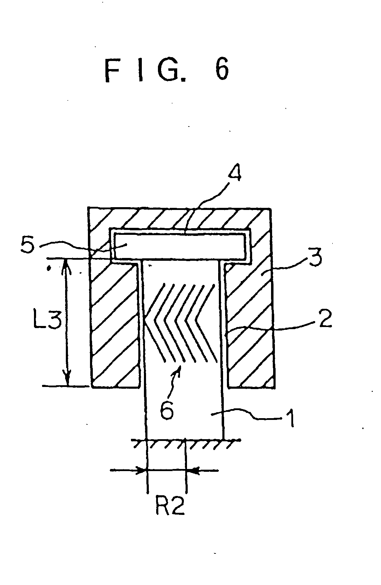

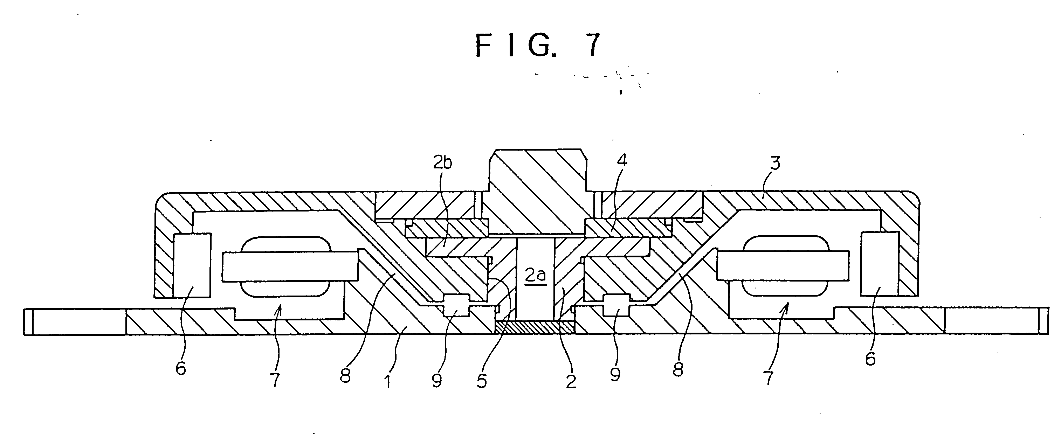

An example of a dynamic bearing device which reflects an internal state of the art is shown in Figure 6 and Figure 7 hereof.

As shown in figure 6, this type of dynamic bearing device is composed of a cylindrical radial dynamic pressure bearing 2 and a flange-shape thrust dynamic bearing 2b which follows the radial dynamic pressuere bearing 2. A rotary member 3 is radially supported by the radial dynamic pressure bearing 2, whereas the rotary member 3 is axially supported by the thrust dynamic pressure bearing 2b.

As shown in figure 6, grooves 2c are formed in the circumferential direction of the bearing surface of the radial dynamic bearing 2, whereas grooves (not shown) are also formed in the bearing surface of the thrust dynamic pressure bearing 2b in the same manner. Oil fills the gap 5 between the radial dynamic pressure bearing 2, the thrust dynamic bearing 2b and the rotary member 3.

Further, figure 7 shows the detailed construction of the dynamic pressure bearing device. As shown in figure 7, the dynamic pressure bearing device has a stationary base 1. A lower potion of a cylindrical radial bearing portion 2 is fitted and fixed to the centre of the stationary base 1. A thrust bearing portion 2b is formed on the upper portion of the radial bearing portion 2.

A rotary member has a bottom rotor 3 and a thrust retaining member 4 which are rotatably supported by the radial bearing portion 2 and the thrust dynamic pressure bearing 2b respectively. An oil retaining gap 5 is formed between the rotary member and the radial bearing portion 2 and between the rotary member and the thrust dynamic pressure bearing 2b.

As shown in Figure 7, a magnet 6 is fixed to an inner circumferential surface of the bottom rotor 3, and a motor is defined between this magnet 6 and a stator 7 formed by windings around an iron core fixed to the side of the stationary base 1.

An annular oil sump 9 is formed between the lower surface of the bottom rotor 3 and the stationary base 1. Sump 9 is in fluid communication with the gap 5, as shown in Figure 7. A space 8 having a central portion slanted upwards and away from the sump 9 in the outward radial direction is formed between the lower surface of the bottom rotor 3 and the upper surface of the stationary base 1.

An oil feed hole 2a is formed along the axial centre of the thrust dynamic pressure bearing 2. Oil is fed from the oil feed hole 2a to the gap 5. Overflow oil from the gap 5 is received into the oil sump 9.

According to the dynamic pressure bearing having such a structure, when the rotary member rotates, due to the viscosity of the oil, the oil is entrained into the narrow portions of the gap 5 and compressed to increase the pressure of the oil. The pressure balances the weight of the rotary member to support the rotary member and to thereby form oil films in the gap 5. Thus, the rotary member is supported in a non-contact state with the radial dynamic pressure bearing 2 and the thrust dynamic pressure bearing 2b by the dynamic pressure generated by the rotation of the rotary member.

As shown in Figure 7, the oil sump 9 is formed between the lower surface of the bottom rotor 3 and the upper surface of the stationary base 1. The space 8 is in fluid communication with the oil sump 9.

Since the vertical width of space 8 is very small, even when the bottom rotor 3 is not rotating, oil is raised to the bottom portion of the space 8, by capillary action.

On the other hand, upon rotation of the bottom rotor 3, since the centrifugal force caused by the rotation is applied to the interior of the space 8, the oil is further raised through the space 8. As a result, there is a risk that the oil will leak from the open end of the space 8.

Further, in the dynamic pressure bearing device shown in Figure 7, in order to miniaturise and reduce the thickness of the rotary member 3, it is necessary to shorten the length of the radial dynamic pressure bearing 2.

However, if the radial dynamic pressure bearing 2 is simply shortened without changing the conventional design, it is impossible to obtain sufficient dynamic pressure in the radial direction of the rotary member 3. It has thus not been possible to meet the requirement for miniaturisation and flatness.

US 5533811 describes a hydrodynamic bearing assembly which has a surface tension seal at one or both ends of the assembly inverted in direction to enable the length of the hydrodynamic bearing to be increased.

Accordingly, an object of the present invention is to provide a dynamic pressure bearing device that may prevent oil leakage.

Another object of the present invention is to provide a dynamic pressure bearing device which may ensure sufficient rigidity when the rotary member is miniaturised and thinned into a flat form.

With reference to the first mentioned object, according to a first aspect of the present invention there is provided a dynamic pressure bearing device comprising the features of claim 1.

A plurality of thrust grooves may be formed in a circumferential direction of each of the top surface and the bottom surface of a disk. Further, a plurality of radial grooves may be formed in a circumferential direction on the outer circumferential surface of the disk.

Thus, according to the first aspect of the present invention, when the rotary member is not is rotation, the oil within the oil sump is raised to the bottom portion of the said space by capillary action. On the other hand, when the rotary member is in rotation, since the centrifugal force caused by the rotation works on the oil within the space, the oil is likely to be further raised in the space.

The opening area of the said space is gradually increased from the central portion in the radial direction. Accordingly, in the space, the force which raises the oil by centrifugal force is weakened. Thus, oil within the space is only somewhat raised and there is no risk of leakage to the outside.

According to the second aspect of the present invention, it is possible to increase the radial length of the radial dynamic pressure bearing portion in comparison with the conventional bearing. Thus, even with reduced height it is possible to obtain sufficient rigidity to support the rotary member. Accordingly, in order to miniaturise and flatten the rotary member, it is possible to reduce the overall height of the dynamic pressure bearing to miniaturise the bearing while keeping sufficient rigidity.

It is preferable that the thrust dynamic pressure bearing portions and the radial dynamic pressure bearing portion are bearings of a motor, and that the rotary member is a rotary portion of the motor. Furthermore, it is preferable that the motor is a high speed rotational motor.

A rotary apparatus can be constructed using a spindle motor as a drive means for driving the rotary portion.

Embodiments of the present invention will now be described in more detail, by way of example only and with reference to the accompanying drawings, in which:
Fig. 1 is a cross-sectional view showing a dynamic pressure bearing device according to an embodiment of the present invention as applied to a spindle motor;
Fig. 2 is a front view showing the bearing portion of the embodiment of Figure 1.
Fig. 3 is a plan view showing the bearing portion;
Fig. 4 is a bottom view showing the bearing portion;
Fig. 5 is a cross-sectional view of the primary part thereof;
Fig. 6 is a cross-section view showing a device reflecting an internal state of the art;
Fig. 7 is a cross-sectional view showing a device reflecting an internal state of the art; and
Fig. 8 is an external view of a rotary apparatus using a spindle motor.

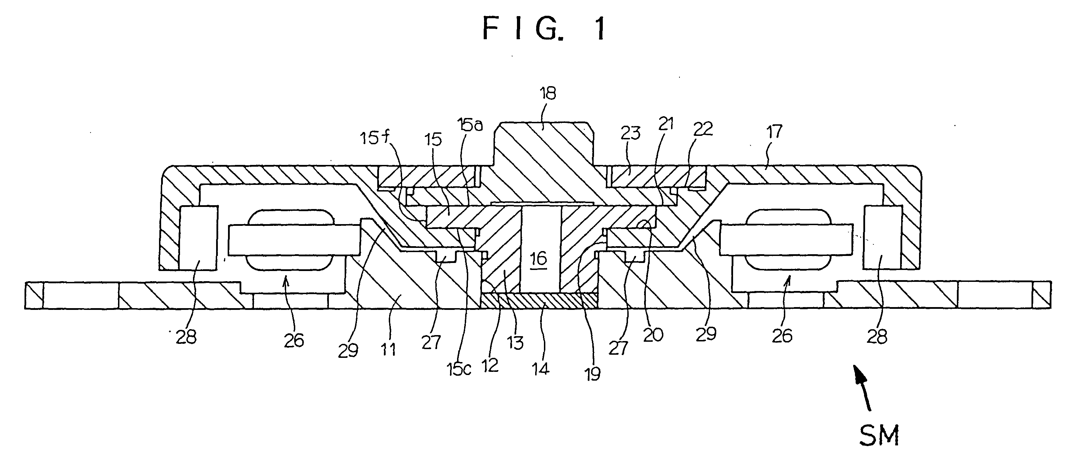

A dynamic pressure bearing device according to a preferred embodiment of the present invention will now be described in detail with reference to Figs. 1 to 5.

Fig. 1 is a cross-sectional view showing the overall structure of the dynamic pressure bearing device according to this embodiment as applied to a spindle motor of high rotational speed.

In this embodiment, as shown in Figure 1, there is provided a stationary base 11. A central hole 12 is formed at the centre of the stationary base 11. A lower portion of a cylindrical stationary shaft 13 is press-fitted into the central hole 12.

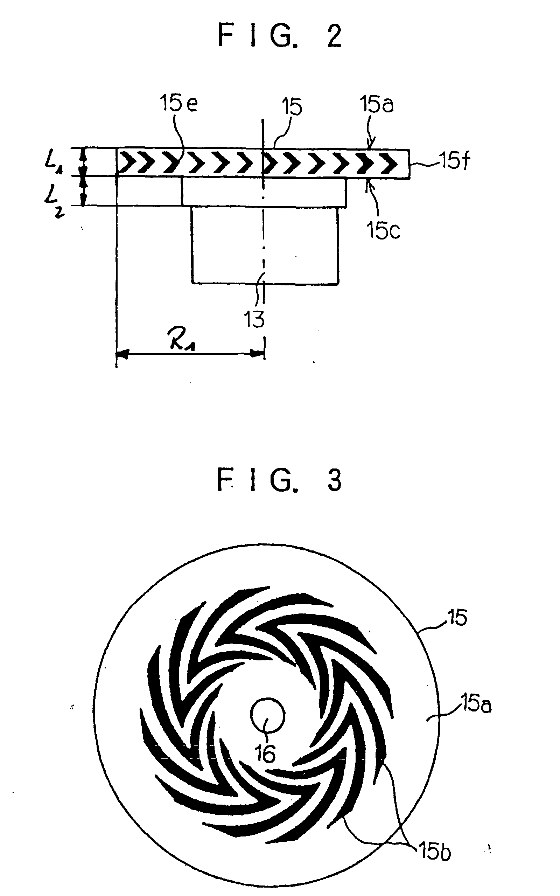

As shown in Figures 1 and 2, a flange disk 15 for the bearing is provided coaxially with the stationary shaft 13 as the upper portion thereof. Although as illustrated, flange disk 15 is formed integrally with the stationary shaft 13, instead the flange disk 15 may be formed discretely from the stationary shaft 13 and may be coupled therewith by suitable means.

An oil feed hole 16 for feeding oil is provided along the axial centre of the inner central portion of the stationary shaft 13. The opening of the oil feed hole 16 may be covered by a sealing cover 14 after charging or replenishment with oil.

An outer circumferential surface of the flange disk 15 is formed as a radial dynamic pressure bearing portion 15f for supporting the rotary member, composed of a bottom rotor 17 and a thrust retaining portion 18, in the radial direction.

As best shown in Figure 2, a plurality of grooves 15e are provided at equal intervals around the circumferential face of the radial dynamic pressure bearing portion 15f. Oil is forcibly introduced into the grooves 15e to generate pressure. As shown in Figure 2, each groove 15e is formed, for example, as a chevron with the downstream ends thereof stopped. In the illustrated arrangement, the width of each of the grooves 15e is substantially equal to the interval between adjacent grooves 15e.

The top and bottom surfaces of the flange disk 15 form thrust dynamic pressure bearing portions 15a and 15c, respectively. These support the rotary member, composed of the bottom rotor 17 and the thrust retaining portion 18 in the axial direction.

As shown in Fig. 3, a plurality of thrust grooves 15b are provided at equal intervals in a circumferential arrangement at a position a predetermined distance away from the centre of the thrust dynamic pressure bearing portion 15a. Oil is forcibly introduced into the grooves to generate pressure. As shown in Figure 3, the width of each thrust groove 15b is substantially equal to the interval between adjacent thrust grooves 15b.

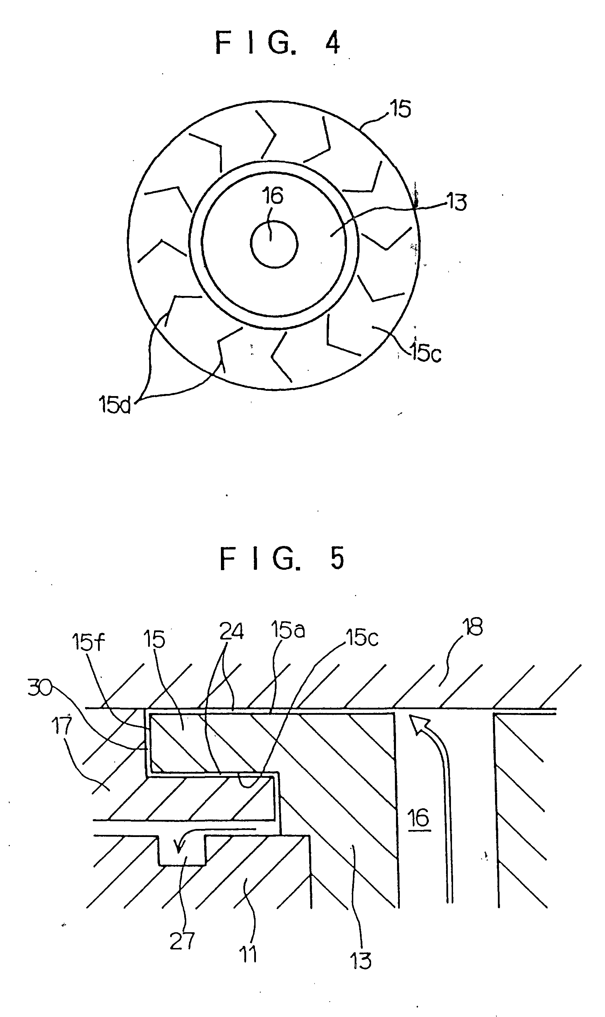

As shown in Figure 4, a plurality of thrust grooves 15d which are substantially the same as the thrust grooves 15b are provided at equal intervals in a circumferential direction at a position a predetermined distance away from the centre of the thrust dynamic pressure bearing portion 15c.

The thrust grooves 15d are schematically depicted in the drawings. In practice, the thrust grooves 15d are arranged in the same manner s the thrust grooves 15b so that the width of each thrust groove 15d is substantially the same as the interval between adjacent thrust grooves 15d.

As can be seen in Figure 1, a substantially inverted truncated conical recess is formed in the central portion of the bottom rotor 17. A central hole 19 which is to be engaged with the upper, outer circumference of the stationary shaft 13 is formed in the bottom of the recess. Three-stepped annular portions 20, 21 and 22 each of which is coaxial with the central hole 19 are formed on the flank of the recess.

The flange disk 15 is fitted in the stepped portion 20 and a flanged portion of a thrust retaining portion 18 is fitted in the stepped portion 21. Furthermore, an annular magnet 23 for chucking is fitted in the thrust retaining portion 18 with the outer circumferential portion of the magnet 23 fitted in the stepped portion 22.

With such an arrangement, the rotary member composed of the bottom rotor 17 and so on may be born in the axial direction by the thrust dynamic pressure bearing portions 15a and 15c and may be born in the radial direction by the radial dynamic pressure bearing 15f.

As shown in Figure 5, gaps 24 are formed between the thrust dynamic pressure bearing portions 15a and 15c and the rotary member, whereas a gap 30 is formed between the radial dynamic pressure bearing portion 15f and the rotary member.

As shown in Figure 5, oil that has been fed through the oil feed hole 16 fills the gaps 24 and 30. Overflow oil is received in an annular oil sum 27 which has a recessed cross-section provided in the central top portion of the stationary base 11. The oil sump 27 is a reservoir for overflow oil. After the oil is charged or replenished, the opening of the oil feed hole 16 is covered by the sealing cover 14.

As shown in Figure 1, the oil sump 27 is in fluid communication with the space 29 for preventing oil leakage. The space 29 is slanted at its central portion and its opening area is gradually increased in the radial outward direction.

A stator 26 formed by windings around an iron core is mounted on an outer circumferential of the stationary base 11 at a position facing the magnet 28 which is mounted on the inner circumferential surface of the bottom rotor 17.

The operation of the above mentioned embodiment will now be described.

When the rotary member composed of the bottom rotor 17 and the thrust retaining portion 18 is at a standstill, the inner circumferential surface (which is the surface to be born) of the rotary member is in contact with the surfaces of the thrust dynamic pressure bearings 15a and 15c and the radial dynamic pressure bearing 15f. For this reason, the gaps 24 and 30 are not kept constant but there are the wide and narrow portions.

Consequently, when the rotary member starts to rotate, due to the viscosity of the oil in the gaps 24 and 30, the oil is entrained and compressed in the narrow portions of the gaps 24 and 30 and the pressure of the oil therefore increases. The pressure is such as to balance the weight of the rotary member so as to support the rotary member and oil films are formed in the gaps 24 and 30.

Thus, the rotary member composed of the bottom rotor 17 and the thrust retaining portion 18 is supported in a non-contact state with the radial dynamic pressure bearings 15a and 15c and the radial dynamic pressure bearing portion 15f as a result of the dynamic pressure generated by the rotation of the rotary member.

As described above, in this embodiment, a plurality of thrust grooves 15b and 15d are formed on the top and bottom surfaces of the flange disk 15 to form the thrust dynamic pressure bearing portions 15a and 15c. A plurality of radial grooves 15e are formed on the outer circumference of the flange disk 15 to form the radial dynamic pressure bearing portion 15f.

For this reason, as shown in Figure 2, a radial width R1 of the radial dynamic pressure bearing portion 15f is greater than the radial width R2 of the conventional radial dynamic pressure bearing shown in Figure 6. Accordingly, even if its height L1 is decreased, it is possible to ensure sufficient rigidity to support the rotation of the bottom rotor 17. Thus, according to this embodiment, it is possible to reduce the overall height of the dynamic pressure bearing when the rotary member is miniaturised or flattened.

If it is impossible to ensure sufficient rigidity with a height only of L1 for the radial dynamic pressure bearing portion 15f; in order to compensate for the deficient rigidity, as shown in Figure 2, it is possible to apply a radial dynamic pressure bearing having a vertical height L2 to the upper portion of the stationary shaft 13. In this case, the height L2 may be rather shortened in comparison with a height L3 of the conventional radial dynamic pressure bearing shown in Figure 6, so that the relationship, (L1 +L2) < L3, is established. Accordingly, it is possible to reduce the overall height of the dynamic pressure bearing much more than in the conventional arrangement.

In this embodiment, since the thrust dynamic pressure bearing portions 15a and 15c and the radial dynamic pressure bearing portion 15f are formed integrally in the flange disk 15, the precision of a right angle between these portions can be improved.

Furthermore, in this embodiment, since the thrust dynamic pressure bearing portions 15a and 15c and the radial dynamic pressure bearing portion 15f are formed integrally in the flange disk 15 and the overall height of the dynamic bearing is shortened, it is possible to receive a relatively large lower portion of the stationary shaft 13 into the central hole 12 of the base 11. As a result of this, the mounting strength of the stationary shaft 13 is increased.

In this embodiment, the thrust grooves 15b and 15d are formed for the thrust dynamic pressure bearing portions 15a and 15c and the radial grooves 15e are formed for the radial dynamic pressure bearing portion 15f. Instead thereof, it is however possible to provide grooves in the surfaces, to be born, of the bottom rotor 17, and also to provide the grooves in both the bearing portion and the bearing surface to be born.

Furthermore, in this embodiment, although an explanation has been given with respect to the dynamic pressure bearings in which the flange disk 15 is fixed to the stationary base 11, it is possible to apply the present invention to a dynamic pressure bearing in which the flange disk 15 rotates.

When the rotary member comprising the bottom rotor 17 is stationary, oil within the oil sump 27 is raised up to the lower portion of the space 29 by capillary action.

On the other hand, upon rotation of the bottom rotor 17, the centrifugal force caused by the bottom rotor 17 is applied to the oil that has been raised to the lower portion within the space 29 so that the oil is likely to be moved to the outside.

However, as shown in Figure 1, the opening area is gradually increased in the radially outward direction. Accordingly, in the space 29, the action tending to raise the oil by centrifugal force is weakened, so that the oil within the space 29 is only somewhat raised, and there is no fear of leakage to the outside.

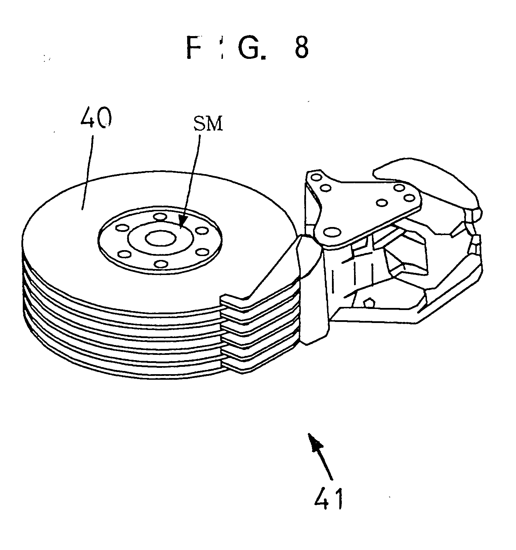

Figure 8 shows an external view of a rotary apparatus 41 using a spindle motor which includes the dynamic pressure bearing device hereof. This rotary apparatus 41 is a disk drive, constructed by fitting a rotary portion 40 like a magnetic disk, an optical disk, polygon mirror or the like to the rotary member 17 as shown in Figure 1 of the spindle motor SM.

As described above according to the present invention, a space having a lower portion slanted downwardly and radially inward towards the centre portion is formed for preventing oil leakage. The opening area of this space is gradually increased in the radially outward direction so that oil leakage from the oil sump does not occur.

Further, as have been described above, the top and bottom surfaces of the bearing disk are used as thrust dynamic pressure bearing portions for supporting the rotary member in the axial direction, whereas the outer circumferential surface of the disk is used as the radial dynamic pressure bearing portion for supporting the rotary member in the radial direction.

Thus, according to the present invention, it is possible to increase the radial length of the radial dynamic pressure bearing portion in comparison with the conventional bearing. Accordingly, even if its height is reduced, it is possible to obtain sufficient rigidity to support the rotary member. Hence, in order to miniaturise and flatten the rotary member to be born, it is possible to reduce the overall height of the dynamic pressure bearing while maintaining sufficient rigidity.

The aforegoing description has been given by way of example only and it will be appreciated by a person skilled in the art that modifications can be made without departing from the scope of the present invention as defined by the appended claims.

## Claims

1. A dynamic pressure bearing device comprising:
a stationary base (11);
a bearing member (13, 15);
a rotary member (17, 18) supported rotatably by the bearing member;
a first gap (24, 30) formed between the bearing member (13, 15) and the rotary member (17, 18);
oil contained in said first gap (24, 30) for providing an oil film in said first gap (24, 30) so as to support the rotary member during operation of the bearing device;
a further gap extending between a radially extending surface of the rotary member and a radially extending surface of the stationary base;
an oil sump (27) arranged in the said radially extending surface of the stationary base (11) and arranged to receive excess oil overflowing from said first gap (24, 30);
said further gap being arranged in fluid communication with a space (29) extending between a surface of the rotary member (17, 18) and a radially extending surface of the stationary base (11) and slanting upwardly in a radially outward direction for accommodating oil forced from the sump (27) and into said space (29) through capillary action and during operation of the bearing device also through centrifugal force; wherein
said space is arranged with an opening area which increases in the radially outward direction for preventing leakage of oil from the bearing device via the space (29) and arising from oil flowing in the space (29) resulting from centrifugal force generated during operation of the device.

2. A dynamic pressure bearing device as claimed in claim 1, **characterised in that** said bearing member comprises a disk (15) having a top surface (15a) which forms a thrust dynamic pressure bearing portion for supporting the rotary member (17, 18) in an axial direction, and an outer circumferential surface (15f) which forms a radial dynamic pressure portion for supporting said rotary member (17, 18) in a radial direction.

3. A dynamic pressure bearing device as claimed in claim 2, **characterised in that** the top surface (15a) of said disk (15) has a plurality of grooves (15b) formed therein, and the outer circumferential surface (15f) of said disk (15) has a plurality of grooves (15e) formed therein.

4. A dynamic pressure bearing device as claimed in claim 3, **characterised in that** the said disk (15) has a bottom surface (15c) which forms a thrust dynamic pressure bearing portion for supporting the rotary member (17, 18) in an axial direction and **in that** a plurality of grooves (15d) are formed in said disk bottom surface (15e).

5. A dynamic pressure bearing device as claimed in claim 3 or 4, **characterised in that** the grooves (15b, 15d, 15e) are chevron shaped in the respective surface (15a, 15c, 15e).

6. A spindle motor comprising a dynamic pressure bearing device as claimed in any preceding claim.

7. A rotary apparatus comprising a spindle motor as claimed in claim 6.

## Patentansprüche

1. Dynamische Drucklagervorrichtung, umfassend:
eine stationäre Basis (11),
ein Lagerteil (13, 15),
ein Drehteil (17, 18), welches durch das Lagerteil drehbar gelagert wird,
einen ersten Spalt (24, 30), der zwischen dem Lagerteil (13, 15) und dem Drehteil (17, 18) ausgebildet ist,
Öl, welches in dem ersten Spalt (24, 30) enthalten ist, um einen Ölfilm in dem ersten Spalt (24, 30) vorzusehen, um das Drehteil bei einem Betrieb der Lagervorrichtung zu lagern,
einen weiteren Spalt, der sich zwischen einer radial sich erstreckenden Oberfläche des Drehteils und einer radial sich erstreckenden Oberfläche der stationären Basis erstreckt,
einen Ölsumpf (27), welcher in der radial sich erstreckenden Oberfläche der stationären Basis (11) angeordnet ist und dazu angeordnet ist, überschüssiges, von dem ersten Spalt (24, 30) überströmendes Öl aufzunehmen,
wobei der weitere Spalt in Fluidverbindung mit einem Raum (29) angeordnet ist, welcher sich zwischen einer Oberfläche des Drehteils (17, 18) und einer radial sich erstreckenden Oberfläche der stationären Basis (11) erstreckt und in einer Richtung nach radial auswärts nach oben geneigt ist zur Unterbringung von Öl, welches durch Kapillarwirkung und bei dem Betrieb der Lagervorrichtung auch durch eine Zentrifugalkraft aus dem Sumpf (27) und in den Raum (29) hinein gedrängt wird,
wobei der Raum mit einem Öffnungsbereich angeordnet ist, welcher sich in der Richtung nach radial auswärts vergrößert, um eine Leckage von Öl aus der Lagervorrichtung über den Raum (29) und ein Ansteigen von Öl zu vermeiden, welches aufgrund der beim Betrieb der Vorrichtung erzeugten Zentrifugalkraft in den Raum (29) strömt.

2. Dynamische Drucklagervorrichtung nach Anspruch 1, **dadurch gekennzeichnet, dass** das Lagerteil eine Scheibe (15) mit einer oberen Oberfläche (15a), welche einen dynamischen Axialdrucklagerabschnitt zum Lagern des Drehteils (17, 18) in einer axialen Richtung bildet, sowie mit einer äußeren Umfangsoberfläche (15f) umfasst, welche einen dynamischen Radialdruckabschnitt zum Lagern des Drehteils (17, 18) in einer radialen Richtung bildet.

3. Dynamische Drucklagervorrichtung nach Anspruch 2, **dadurch gekennzeichnet, dass** die obere Oberfläche (15a) der Scheibe (15) eine Mehrzahl von darin ausgebildeten Nuten (15b) aufweist und die äußere Umfangsoberfläche (15f) der Scheibe (15) eine Mehrzahl von darin ausgebildeten Nuten (15e) aufweist.

4. Dynamische Drucklagervorrichtung nach Anspruch 3, **dadurch gekennzeichnet, dass** die Scheibe (15) eine untere Oberfläche (15e) aufweist, welche einen dynamischen Axialdrucklagerabschnitt zum Lagern des Drehteils (17, 18) in einer axialen Richtung bildet, und dadurch, dass eine Mehrzahl von Nuten (15d) in der unteren Oberfläche (15e) der Scheibe ausgebildet sind.

5. Dynamische Drucklagervorrichtung nach Anspruch 3 oder 4, **dadurch gekennzeichnet, dass** die Nuten (15b, 15d, 15e) zickzack-artig in der jeweiligen Oberfläche (15a, 15c, 15e) vorgesehen sind.

6. Spindelmotor, umfassend eine dynamische Drucklagervorrichtung nach einem vorangehenden Anspruch.

7. Drehvorrichtung, umfassend einen Spindelmotor nach Anspruch 6.

## Revendications

1. Dispositif de roulement à pression dynamique comprenant :
une base fixe (11);
un élément de roulement (13, 15) ;
un élément de rotation (17, 18) soutenu par l'élément de roulement de manière à pouvoir tourner ;
un premier espace (24, 30) formé entre l'élément de roulement (13, 15) et l'élément de rotation (17, 18) ;
de l'huile contenue dans ledit premier espace (24, 30) pour fournir un film lubrifiant dans ledit premier espace (24, 30) pour soutenir l'élément de rotation pendant le fonctionnement du dispositif de roulement ;
un autre espace s'étendant entre une surface de l'élément de rotation s'étendant radialement et une surface de la base fixe s'étendant radialement ;
un bac d'huile (27) disposé dans ladite surface de la base fixe (11) s'étendant radialement et disposé pour recevoir l'excédent d'huile débordant dudit premier espace (24, 30) ;
Ledit autre espace étant disposé en communication fluide avec un espace (29) s'étendant entre une surface de l'élément de rotation (17, 18) et une surface de la base fixe (11) s'étendant radialement et inclinée vers le haut dans une direction radialement extérieure pour contenir l'huile forcée provenant du bac (27) et entrée de force dans ledit espace (29) à travers une action capillaire et également par la force centrifuge pendant le fonctionnement du dispositif de roulement ; dans lequel ledit espace est disposé avec une zone d'ouverture qui s'accroît dans une direction radialement extérieure pour empêcher une fuite d'huile du dispositif de roulement à travers l'espace (29) et provenant de l'huile s'écoulant dans l'espace (29) résultant de la force centrifuge générée pendant le fonctionnement du dispositif.

2. Dispositif de roulement à pression dynamique selon la revendication 1, **caractérisé en ce que** ledit élément de roulement comprend un disque (15) présentant une surface supérieure (15a) qui forme une portion de roulement de butée à pression dynamique pour soutenir l'élément de rotation (17, 18) dans une direction axiale, et une surface extérieure circonférentielle (15f) qui forme une portion radiale à pression dynamique pour soutenir ledit élément de rotation (17, 18) dans une direction radiale.

3. Dispositif de roulement à pression dynamique selon la revendication 2, **caractérisé en ce que** la surface supérieure (15a) dudit disque (15) présente une pluralité de rainures (15b) qui y sont formées, et **en ce que** la surface extérieure circonférentielle (15f) dudit disque (15) présente une pluralité de rainures (15e) qui y sont formées.

4. Dispositif de roulement à pression dynamique selon la revendication 3, **caractérisé en ce que** ledit disque (15) présente une surface inférieure (15c) qui forme une portion de roulement de butée à pression dynamique pour soutenir l'élément de rotation (17, 18) dans une direction axiale et **en ce qu'**une pluralité de rainures (15d) sont formées à la surface inférieure dudit disque (15e).

5. Dispositif de roulement à pression dynamique selon la revendication 3 ou 4, **caractérisé en ce que** les rainures (15b, 15d, 15e) sont en forme de chevron sur la surface respective (15a, 15c, 15e).

6. Moteur à axe comprenant un dispositif de roulement à pression dynamique selon l'une quelconque des revendications précédentes.

7. Dispositif de rotation comprenant un moteur à axe selon la revendication 6.
